# EUROPEAN PATENT SPECIFICATION

(11) **EP 3 556 940 B1**
(45) Date of publication and mention of the grant of the patent: **09.06.2021**
(21) Application number: 19460020.1
(22) Date of filing: 16.04.2019
(51) Int. Cl.: E01F 13/06

(54) **METHOD OF PERMANENT ADJUSTMENT OF SPRING ELEMENTS TENSION FOR USE UNDER DYNAMIC LOAD**
VERFAHREN ZUR DAUERHAFTEN EINSTELLUNG DER SPANNUNG VON FEDERELEMENTEN FÜR DEN EINSATZ UNTER DYNAMISCHER LAST
PROCÉDÉ DE RÉGLAGE PERMANENT DE LA TENSION D'ÉLÉMENTS DE RESSORT POUR L'UTILISATION SOUS UNE CHARGE DYNAMIQUE

(30) Priority: 20.04.2018 PL 42529018
(43) Date of publication of application: 23.10.2019
(73) Proprietor: Bombardier Transportation (ZWUS) Polska SP. Z O.O, 40-142 Katowice (PL)
(72) Inventor: SIEDLACZEK, Przemyslaw, 41-500 Chorzów (PL); RADWANSKI, Wojciech, 43-100 Tychy (PL); BIALAS, Andrzej, 41-250 Czeladz (PL); PELKA, Aleksander, 43-100 Tychy (PL)
(74) Representative: Swiecicki, Krzysztof

(56) References cited:
- WO-A2-2012/169876
- FR-A1- 2 602 806
- KR-A- 20080 000 137
- US-A- 4 897 960

## Description

The invention relates to a method nf adjusting the tension of spring elements permanently using a screw and a nut that are hereinafter also referred to as a two-piece special screw assembly to be used in the circuit of a reusable break off protection mechanism of a barrier boom.

The Polish Patent Document PL223989 discloses a device for safe and nondestructive disconnecting of parts of equipment, in particular the parts of a barrier boom that are exposed to such sudden external factors as impact. After the value of the force that has been set with the use of an adjusting screw has been exceeded, the barrier boom joint gets disconnected from the holder and the barrier boom gets broken away. To re-mount the barrier boom, a complex operation of releasing the springs, placing the barrier boom joint in to the holder and putting the springs under tension with the use of screws has to be performed, however the manner of setting the break off force is in this case undetermined, whereas the adjustment process is performed on the basis of stressing the springs with the use of a screw whose length is fixed.

The US patent application No. US4897960A discloses a method of adjusting the tension of spring elements permanently for use under dynamic load in reusable ball break off protection mechanisms of a barrier boom break off protection system, wherein the spring elements are placed in a holder.

The international patent application No. WO 2012/169876 discloses a gate barricade that releases against external impact, characterized by: an elongated barrier member having a depression; a beam is fitted and hinged to the elongated barrier member; an adjustable ball detent including a ball detent housing to receive a ball, an elastic member adjacent to the ball, and a fastening means for securing the elastic member and the ball within the ball detent housing, wherein said ball is engaged with the depression for fastening retaining the elongated barrier member in the beam; wherein the elongated barrier member swings away from the beam, if an external force greater than the compression force of the elastic member is applied on the elongated barrier member.

The drawback of such known solutions is that whenever the barrier boom has been pushed out, e.g. due to impact, it is required to perform a complex operation of calibrating the value of tension to put it together and such an operation has to be performed by qualified staff who has to be called to come specifically for this purpose.

In other reusable break away protection devices that are used e.g. in a break off protection mechanism of a barrier boom it is required to use disc springs in order tn achieve as high break off force value as necessary. The disc springs whose dimensions are defined in e.g. DIN 2093 "Disc springs - Quality specifications" standard are characterized by high value of compressive force while the spring deflection is small. To shape the elasticity characteristics, e.g. to increase the spring deflection, springs are stacked. Thanks to the accumulation of dimensional tolerances, the final stack of springs might have various height and thereby its tension force in relation to the defined deflection will differ accordingly.

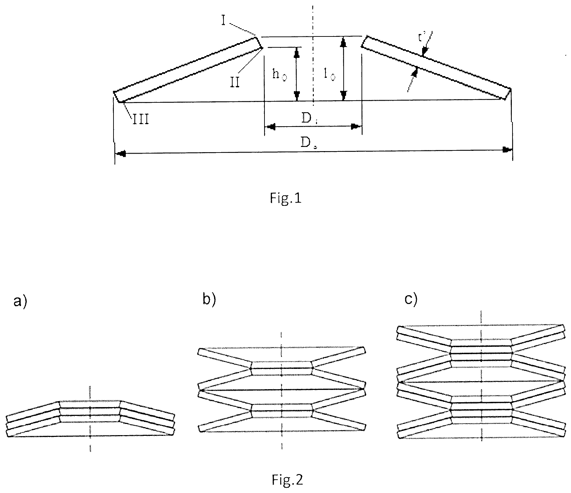

For example, a single spring (DIN 2093) D450.305.175 (Fig.1) of nominal dimensions, outer diameter Dₒ = 45mm, inner diameter D₁ = 22,4mm, free overall height lₒ = 3.05mm and thickness t = 1.75mm and maximum cone height hₒ = 1.3mm, with cone height of 0,75hₒ enables to achieve the forces within the range of tolerance of F = 3650N +15% : -7.5%. Dimensional tolerance of the spring amounts to dt - +0.04: -0.12 mm in respect of thickness and dlₒ = +0.15 : -0.08mm in respect of free overall height.

When eight (8) pcs (DJN 2093) D450.305.175 (Fig.2) are stacked in series, the tolerance value is multiplied. The nominal height of the stack amounts to 24.4mm and the range of tolerance of free overall height of the stack lₒₚ is from 23.76mm to 25,6mm, and therefore - considering the possible deviation in the free overall height of the stack - lₒₚ = 1.84mm , i.e. the value higher than the thickness of a single spring. In the nominal situation, the displacement of up to 75% of the maximum cone height of the stack (the height of 16.6mm) causes the force of 3650N. Due to the lower limit of tolerance of the height, the reduction of the cone height by 0.64mm results in achieving the force of 3430N, whereas the increase of the cone height by 1.2mm, results in the force of 4040N. Therefore, only due to the tolerance on the free overall height of the stack lₒₚ, the forces that occur may be within the range of -6%+11%. The deviation from the nominal value is within the range of the admissible tolerance of the force (DIN 2093), however it is a big absolute difference (17%).

In practice, the accumulated tolerances of the socket variant in which the springs and the clamping item operate, as well as the tolerance of the springs make it impossible to precisely achieve the repeatability of the value of the tension of the circuit.

Such a state of affairs becomes complicated when the springs work in a close vicinity of the point in which they get flattened. The minimum height of an example of a stack that causes flattening of the springs amounts to 10.4mm, however it results in a nominal tension force of 4475N. Further dislocation is not possible and it causes unlimited growth of the forces in the circuit which results in a damage. In the case of the lower limit of tolerance, the minimum height of the stack of springs amounts to 9.2mm and exerts the force of 4100N. When however the upper tolerance limit is taken into account, the stack gets flattened. The resultant lack of possibility to compress during further dislocation turns into an uncontrollable growth of forces in the circuit in operation and it is a hazardous situation.

To achieve higher precision and protect against unwanted flattening, it would be necessary to implement a time-consuming and costly inspection process to be performed by qualified staff. The inspection process should consist in initial measurement of the height of the stack, the thickness of respective items and the force and then in making the relevant tension adjustment through, e.g. adding or removing appropriate washers.

The use of the method consistent with the invention which results in forming a set of two-piece special screw assembly of adjustable height is a solution that eliminates the drawbacks of the known solutions, as well as the painstaking measurement and adjustment process. An example of a special screw with Hexagon socket adapter 10 (ISO 2936) and two right-hand threads of different diameters has a bottom thread of the diameter of M35x1.5 which is supposed to be screwed into the holder and to exert tension on the stack of springs that are being pressed down by the screw. The upper thread of the screw of the diameter of M30x1.5 is intended for permanent fastening of a special nut that locks and secures the clamping thread. The special nut has a notch that enables a permanent connection with the special screw.

The purpose of the invention is therefore to develop a method of adjusting the spring elements tension permanently with the use of a special screw and nut that are also hereinafter referred to as a two-piece special screw assembly that is intended for use in the circuit of a reusable break off protection mechanism of a barrier boom.

This purpose is achieved by the method consistent with the invention in which the spring elements are placed in a holder, and a first relevant tightening of a screw is made with the use of a torque wrench, whereas the torque value is defined in beforehand either experimentally or analytically through analyzing the relation between the tightening torque and the tension of the screw, said value is equivalent to reaching the height of screwing the screw which corresponds to the target and peak tension of the spring elements, and this value is within from 30 to 150 Nm; in that, subsequently from this value the screw is unscrewed by a defined number of revolutions in order to maintain the appropriate working stroke of a ball and a washer, that are being pressed down by the springs, said working stroke results directly from the characteristics of the piece of equipment in order to enable the unobstructed breaking off of a part of the ball break off protection mechanism; and finally the screw is secured against changing its fixed position and against untightening with the use of a special nut, thereby creating one, integrated and monolithic special screw.

Under the method consistent with the invention, the special nut is preferably and permanently connected with a screw using a threadlocker or a wedge, or by means of mechanical damage of the thread, thereby eliminating the possibility of the mutual change of their position in relation to a springs and gaining the possibility of multiple use ot thereby created an integrated special screw without the need to carry out again the process of adjusting the height of a screw and the tension of elements.

The value of tightening torque of a screw preferably falls within the range from 90 to 120 Nm.

The number of revolutions of the screw being unscrewed is preferably selected on the basis of the result of multiplying the number of turns of the wrench by the pitch of the thread of a special screw, however in the case of a pitch of the thread of M35x1.5 screw, the number of revolutions of the screw amounts to 3-3.5 revolutions and preferably to 3,25 which corresponds to the working space of 4.5-5.25 mm and preferably of 1.8 mm.

Thanks to the method used, the influence of the tolerance on the working space is avoided and the working space achieved in this way is of higher accuracy than it could be achieved in the case of a screw of a fixed length without measurements.

The technical solution presented enables also to directly use the holder of the break off protection mechanism to carry out the process of overstraining of the springs in their holder, thereby enabling to prevent the settling of springs over time. To achieve it, the screw is being tightened in the holder with the torque that causes the tension of the springs above the yield point. In the case of (DIN 2093) D.315.163.175 and M35x1.5 screw, the torque shall be within the range of 100-200 Nm, and preferably 130 Nm and such a state shall be maintained for appropriately long time, at least for 48h. After this period of time, the free overall height of the springs decreases slightly, whereas the internal stresses in the material of which the springs are made are released which contributes to the life of these Items and the repeatability of the operating parameters of the springs: spring deflection and spring rate.

Thanks to the method consistent with the invention, the following technical issues are resolved:
- adjustment of the depth at which screws are screwed in and of the spring deflection is unrestricted,
- indirect control of the clamping force through measuring the torque of the torque wrench is enabled,
- the necessity to inspect the dimensions of the springs and the mating elements is eliminated,
- initial overstraining of the stack of springs directly in the spring holder in which they are mounted is enabled,
- after the special nut that is permanently connected with the screw has been used, a special screw of a fixed height is created and it is made possible to unscrew and screw it in multiple times and omit the adjustment process,
- additional protection for the parts of the joint and the holder against humidity using a washer or O-ring is provided,
- the use of various spring elements for the purpose of adjusting the tension, such as disc springs, spiral springs, rubber spring elements, etc. is enabled,
- the duration of adjustment and re-mounting is shortened.

The method of adjusting that is consistent with the invention is universal and can be used to set the tension of the springs of any diameters by means of appropriately matched diameters of screws with special nuts having appropriate pitch of the thread.

The subject matter of the invention is presented as an example of a variant in a Drawing where Fig.1 shows the parameters of a single disc spring, Fig.2 shows the cross - section of parallel arrangement of springs, springs arranged in series or in a combined manner, Fig.3 shows a part of the barrier machine with a barrier boom and a visible special screw consistent with the invention, that is screwed into the holder of a ball break off protection mechanism in a) general view, b) as an isometric view of the joint and c) longitudinal section.

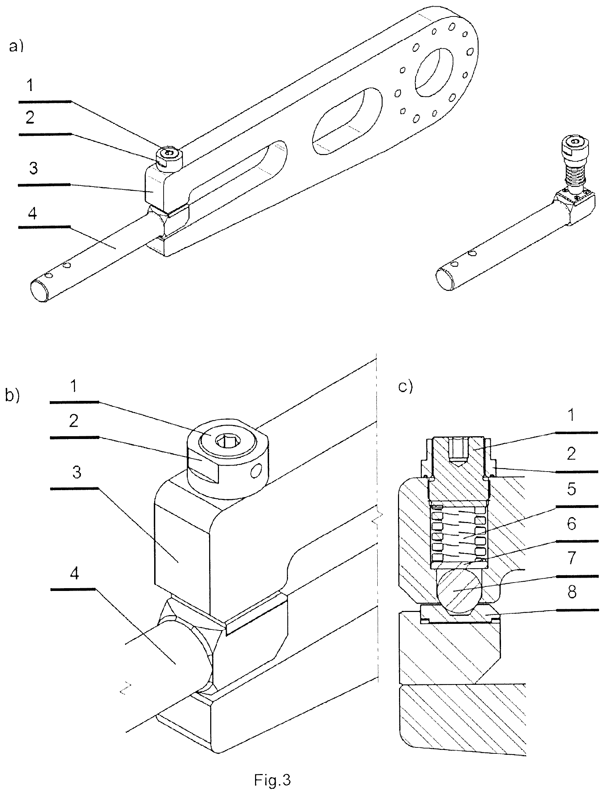

A part of the barrier machine with a barrier boom is shown in Fig.3. The screw (1) with a special nut (2) that is used in the barrier machine is placed in the holder (3) of the ball break off protection mechanism in which there additionally is a stack of spring elements (5) under the screw. Springs of various types, e.g. disc springs, spiral springs, rubber bushes, polymer ones, etc. may be the spring elements. There is a washer for spring elements (6) under the spring elements (5). From the top the washer is leaning against a ball (7) which is located in a recess of a plate of a latch (8) of the break off protection mechanism. The plate of the latch is fastened to the barrier boom (4) that in emergency situations gets broken off.

The method of preparing a permanently adjusted reusable special screw for putting springs under tension covers the following steps:
After the spring elements (5) have been placed in the holder (3), the screw (1) which closes up the holder is screwed in. The thread of the screw should be covered with grease for screws that reduces friction, e.g. grease containing MoS₂. Then, the screw (1) is tightened finally in order to make the springs flatten. The tightening is performed with the use of a torque wrench which restricts the clamping force being generated, and thereby the parts of the break off protection mechanism are protected against overload. The value of the tightening torque is usually defined in beforehand experimentally or analytically by means of analyzing the relation between the tightening torque and the force of tension of the screw and it depends mainly on the stack of springs being pressed down. For example, in the case of a stack of springs of 8x2 (DIN 2093) D.315.163.175 and a M35 screw or a M36 screw, the appropriate torque is within 30-150 Nm, but preferably the torque of 100 Nm should be used. The value of the torque means that the height of screwing in that corresponds to the target, peak tension of spring elements has been achieved. It is favourable when at "the target moment" the turns of the springs become flattened and if one tries to continue tightening, the flattening physically disables screw dislocation but does not prevent further increase of the clamping force. The requirement to measure the tightening torque by the torque wrench is not always required, however it is preferable in order to prevent the truncation of the milled internal thread in the less durable material of the nut of the screw and in order to mitigate the phenomenon of "jamming of the thread" which occurs in the screws made of stainless steel which are tightened with high rate and force, thereby preventing the damage of the items being pressed down, e.g. washers of the ball, etc. The appropriate value of the torque for the selected diameter will therefore depend on a number of parameters, the stack of springs, the geometry of the thread, the screw size, the friction coefficient, the number of turns that the joint has been using. It is however possible to explicitly define the required value for the specific adjustment.

In the next step, the screw (1) is unscrewed by the set number of revolutions in order to implement the appropriate working stroke of the ball (7) and the washer. The working stroke results directly from the required characteristics of the piece of equipment, e.g. the nominal vertical dislocation of the ball of the break off protection mechanism equals 4.5mm and therefore in respect of the screw M35x1.5 the unscrewing within the range of 3-3,5 revolution and preferably by 3.25 of the revolution is applied which enables to create the space for ball displacement within the range of 4.5-5.25mm and preferably 4.8mm. In the case of a stack of springs 8x2 (DIN 2093) D.315.163.175 the range of dislocation corresponds to the initial clamping force within the range of 1000-2200 N, that is set as needed. The principle of screw transmission in order to increase the control over the vertical dislocation parameter is applied here and the adjustment of both the latter parameter and the tension forces is improved significantly.

When the screw (1) is unscrewed by the required number of revolutions, the appropriate working stroke of the spring element that has been flattened in beforehand is achieved. Therefore, the ball of the break off protection mechanism that is being pressed down by the spring element may during the breaking off process be lifted and achieve the peak breaking off force value (in the case herein described the preferable value of the force required in the documentation has a minimum limit on the level of 8000N and no upper limit, however there is a requirement that the breaking off shall happen under the influence of lateral forces), however without the risk that it happens that there will be too little space for the movement of the screw which would make breaking off impossible.

The last step is to permanently block the height and secure the screw (1) against unscrewing. For this purpose a special nut (2) is used and the special nut is screwed on the thread M30x1.5 of the screw (1) that is protruding above the mechanism. The special nut is designed in such a way that it has a recess that enables encompassing ot M35 or M36 thread if - after the adjustment process - it would protrude above the surface. There may be a notch for a gasket in the nut. The gasket is used when it is necessary to ensure the tightness of the joint. The thread of a special nut is secured against unscrewing from within the special screw by means of applying a threadlocker or by damaging the thread of the screw and nut mechanically via a hole in the special nut located on the side or by means of using a cotter pin or a wedge.

Thanks to the method consistent with the invention, the process of firm and repeatable setting of the items being parts of the barrier boom joint in the barrier machine and thanks to that a durable and monolithic special screw is created whose height is adapted to match the specific set of a barrier boom with a stack of springs. Owing to that the subsequent unscrewing and tightening of a special screw eliminates the necessity of re-adjustment of the entire barrier tube joint. Thanks to the method consistent with the invention, if the barrier boom gets broken off, e.g. as a result of having been hit by a car, the entire barrier machine may be repaired quickly using a regular Hexagon key by an unqualified person (e.g. a gate-keeper), thereby eliminating the need to use specialized tools and request qualified staff to come and perform a complex process of calibrating the parts of the barrier boom again. As a result, the repair of a broken off barrier boom can actually be carried out by anybody which contributes to a reduced duration of the repair process and minimized repair cost. Since it is possible to repair the barrier machine immediately, a hazard caused by a long-lasting idle state of the barrier machine at the level crossing, for example, is prevented.

## Claims

1. A method of adjusting the tension of spring elements (5) permanently for use under dynamic load, in reusable ball break off protection mechanisms of a barrier boom break off protection system, wherein the spring elements (5) are placed in a holder (3), **characterized in that** a first relevant tightening of a screw (1) is made with the use of a torque wrench, whereas the torque value is defined in beforehand either experimentally or analytically through analyzing the relation between the tightening torque and the tension of the screw (1), said value is equivalent to reaching the height of screwing the screw (1) which corresponds to the target and peak tension of the spring elements (5), and this value is within from 30 to 150 Nm; **in that**, subsequently from this value the screw (1) is unscrewed by a defined number of revolutions in order to maintain the appropriate working stroke of a ball (7) and a washer (6), that are being pressed down by the springs, said working stroke results directly from the characteristics of the piece of equipment in order to enable the unobstructed breaking off of a part (4) of the ball break off protection mechanism; and finally the screw (1) is secured against changing its fixed position and against untightening with the use of a special nut (2), thereby creating one, integrated and monolithic special screw.

2. The method of Claim 1, **characterized in that** the special nut (2) is permanently connected with a screw (1) using a threadlocker or a wedge, or by means of mechanical damage of the thread, thereby eliminating the possibility of the mutual change of their position in relation to the springs and gaining the possibility of multiple use of thereby created an integrated special screw without the need to carry out again the process of adjusting the height of the screw and the tension of elements.

3. The method of Claim 1, **characterized in that** the value of the tightening torque of a screw (1) is preferably within the range from 90 to 120 Nm.

4. The method of Claim 1, **characterized in that** the number of revolutions of a screw (1) being unscrewed is selected on the basis of the result of multiplying the number of turns of the wrench by the pitch of the thread of a special screw, whereat in the case of a pitch of the thread of M35xl,5 screw, the number of revolutions of the screw amounts to 3-3.5 and preferably to 3.25, which corresponds to the working space of 4.5-5.25 mm, and preferably of 4.3 mm.

## Patentansprüche

1. Verfahren zum dauerhaften Einstellen der Spannung der Federelemente (5) für dynamische Lastanwendungen wiederverwendbaren Kugelsicherungen des Sicherungsmechanismus von Schrankenstange, bei dem die Federelemente (5) in die Buchse (3) eingesetzt werden, **dadurch gekennzeichnet, dass** das erste Anziehen der Schraube (1) selbst mit einem Drehmomentschlüssel erfolgt, und der Wert des Anziehdrehmoments wird experimentell oder analytisch durch eine Analyse des Zusammenhangs zwischen dem Anziehdrehmoment und der Spannung der Schraube (1) vorgewählt und entspricht dem Erreichen einer Einschraubhöhe, die der angestrebten Spitzenspannung der Federelemente (5) entspricht, wobei dieser Wert im Bereich von 30 bis 150 Nm liegt; Anschließend wird die Schraube (1) um eine vorgegebene Anzahl von Umdrehungen aus diesem Wert herausgedreht, um den entsprechenden Arbeitshub der federbelasteten Kugel (7) und der Unterlegscheibe (6) beizubehalten, welcher Arbeitshub sich direkt aus den Eigenschaften der Vorrichtung ergibt, um ein freies Lösen des Kugelsicherungselements (4) zu ermöglichen, und dann wird die Schraube (1) mit einer Spezialmutter (2) gegen ein Verändern ihrer vorgegebenen Position und ein Herausdrehen gesichert, um eine einzige integrierte und monolithische Spezialschraube zu bilden.

2. Verfahren nach Anspruch 1 **dadurch gekennzeichnet, dass** die Spezialmutter (2) mit der Schraube (1) mittels Keilkleber oder mechanischer Gewindeschädigung dauerhaft verbunden ist, wodurch die Möglichkeit einer gegenseitigen Änderung ihrer Position in Bezug auf die Federn eliminiert wird und die Möglichkeit einer wiederholten Verwendung der integrierten Spezialschraube ohne die Notwendigkeit der Durchführung einer wiederholten Prozedur zur Einstellung seiner Höhe und Spannung der Elemente erhalten wird.

3. Verfahren nach Anspruch 1, **dadurch gekennzeichnet, dass** der Wert des Anzugsdrehmoments der Schraube (1) vorteilhafterweise im Bereich von 90 bis 120 Nm liegt.

4. Verfahren nach Anspruch 1, **dadurch gekennzeichnet, dass** die Anzahl der Umdrehungen der herauszudrehenden Schraube (1) auf der Grundlage des Ergebnisses der Multiplikation der Anzahl der Umdrehungen des Schraubenschlüssels mit der Steigung des Gewindes der Spezialschraube gewählt wird, wobei sie im Fall des Gewindes der Schraube M35x1,5 3-3,5 Umdrehungen, vorzugsweise 3,25 beträgt, was einem Arbeitsraum von 4,5-5,25 mm, vorzugsweise 4,8 mm entspricht.

## Revendications

1. Procédé de réglage permanent de tension des éléments élastiques (5) pour des applications dans des conditions de sollicitations dynamiques dans des éléments de sécurité à bille réutilisables d'un dispositif de sécurité d'une perche de barrière, pendant lequel on place les éléments élastiques (5) dans un logement (3), **caractérisé en ce que** on réalise un premier serrage spécifique de la vis (1) à l'aide d'une clef dynamométrique à cadran, et la valeur du couple de serrage a été au préalable choisie expérimentalement ou analytiquement à l'aide d'une analyse de relation entre le couple de serrage et la tension de la vis (1), et elle est équivalente avec le fait d'avoir atteint la hauteur de vissage correspondant à la tension visée, maximale des éléments élastiques (5), cette valeur étant comprise dans la plage de 30 à 150 Nm; ensuite depuis cette valeur on dévisse la vis (1) d'un nombre de tours de consigne, pour conserver une course de travail appropriée la bille (7) et de la rondelle (6) resserrées par les ressorts, laquelle course résulte directement de la caractéristique du dispositif pour rendre possible un détachement aisé de l'organe (4) de l'élément de sécurité à bille, et ensuite on sécurise la vis (1) avant le changement de la position fixée et le dévissage à l'aide d'un boulon spécial (2) en réalisant une vis unique spéciale intègre et monolithique.

2. Procédé selon la revendication 1, **caractérisé en ce que** le boulon spécial (2) est solidaire avec la vis (1) à l'aide de colle ou d'une cale, ou d'une détérioration mécanique du filetage, en éliminant la possibilité d'un changement réciproque de leur position par rapport aux ressorts et en obtenant la possibilité de réutilisation de la vis spéciale intègre sans avoir à réaliser de nouveau la procédure de régulation de son hauteur et la tension des éléments.

3. Procédé selon la revendication 1, **caractérisé en ce que** la valeur du couple de serrage de la vis (1) de préférence est comprise dans la plage de 90 à 120 Nm.

4. Procédé selon la revendication 1, **caractérisé en ce que** le nombre des tours de la vis (1) dévissée est choisi selon le résultat de la multiplication des tours de la clef par les pas de vis de la vis spéciale, dans le cas d'un filetage de vis M35x1,5 celui-ci étant 3-3,5 de tours, et de préférence 3,25, ce qui correspond à un espace de travail de 4,5-5,25 mm, de préférence 4,8 mm.
